(19) Europäisches Patentamt
European Patent Office
Office européen des brevets

(11) **EP 4 328 555 A1**

(12) **EUROPEAN PATENT APPLICATION**
published in accordance with Art. 153(4) EPC

(43) Date of publication:
**28.02.2024 Bulletin 2024/09**

(21) Application number: **22791174.0**

(22) Date of filing: **19.04.2022**

(51) International Patent Classification (IPC):
*G01J 5/08* (2022.01)

(52) Cooperative Patent Classification (CPC):
**G01J 5/08**

(86) International application number:
**PCT/ES2022/070240**

(87) International publication number:
**WO 2022/223863 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.04.2021 ES 202130347**

(71) Applicant: **Universidad Carlos III de Madrid 28919 Leganés - (ES)**

(72) Inventors:
- **VAZQUEZ GARCIA, María del Carmen 28919 LEGANÉS (Madrid) (ES)**
- **CONTRERAS LALLANA, Pedro 28919 LEGANÉS (Madrid) (ES)**
- **NÚÑEZ CASCAJERO, Arantzazu 28919 LEGANÉS (Madrid) (ES)**

(74) Representative: **Herrero & Asociados, S.L. Edificio Aqua - Agustín de Foxá, 4-10 28036 Madrid (ES)**

(54) **PYROMETER WITH HIGH SPATIAL RESOLUTION**

(57)     High spatial resolution pyrometer provided with at least one multi-core fiber (2), and a spatial filter (4), wherein said multi-core fiber has a number N=>2 of cores (3) that are transformed into at least two output fibers (5) through said spatial filter (4), said output fibers (5) being connected to a temperature measurement system (6), wherein the temperature measurement system comprises a wavelength-sensitive demultiplexer (8) with at least two outputs to spatially separate the spectrum of the signal collected by each of the cores (3).

**FIG. 1**

**Description**

TECHNOLOGY SECTOR

The invention belongs to the sector of devices for measuring physical parameters, in particular surface temperature. More specifically, it relates to a pyrometer having different spatial resolutions due to the fact that it is provided with at least one multicore fiber.

BACKGROUND OF THE INVENTION

There are multiple techniques for measuring temperature, but many of them require contact with the surface whose temperature is to be measured, such as thermocouples, thermistors, intrinsic fiber optic sensors such as fiber Bragg gratings, techniques based on Rayleigh, Raman or Brioullin backscattering among others. Infrared (IR) thermography, whether through cameras or pyrometers, does not require contact with said surface, which makes it ideal for measurements in areas where the sensor cannot be physically placed in contact. The spatial resolution associated with far-field measurements of this type of techniques is of the order of ~λ/2; although common commercial systems usually have resolutions of the order of 1mm and can reach resolutions of the order of tens of microns with specific and very expensive collimating optics.

When seeking to measure with resolutions of the order of a few microns, Raman micro-thermography is used, but a highly precise laser spot is required and devices based on this technique usually require a long measurement time, from seconds to several minutes. In processes with rapid temperature variation, such as in industrial machining processes or in the analysis of seismic phenomena, to name a few examples, shorter response times are required. A complete experiment can last a maximum of one or two seconds, and phenomena that require resolutions of the order of tens of microns can also be observed. Application US20110046916A1 describes the use of a bundle of optical fibers to measure the temperature of a mobile substrate at different points. Each fiber is provided with a lens and an array of 2D detectors to measure radiation. It has a filter or slot in front of the detectors. The device measures the emission and reflection spectrum, making it possible to measure in real time surfaces that may be changing. However, this system is complex, presents alignment problems and does not solve the problem of different spatial resolutions on the surface.

SUMMARY OF THE INVENTION

The object of the present invention is to provide a high spatial resolution pyrometer.

To this end, the invention proposes a pyrometer provided with at least one multicore fiber having at least two cores and a spatial filter to separate the different cores into individual fibers provided with a cladding, wherein at least one of said fibers will be intended to measure the temperature. The output fibers are connected to a temperature measurement system that comprises a wavelength-sensitive demultiplexer with at least two outputs to spatially separate the spectrum of the signal collected by each of the cores.

Optionally, the pyrometer is provided with a calibration and/or pointing system.

BRIEF DESCRIPTION OF THE FIGURES

In order to help a better understanding of the features of the invention and to complement this description, the following figures are attached as an integral part thereof, the nature of which is illustrative and not limiting:

Figure 1 shows a diagram of the measurement system of the invention.

Figure 2 is a schematic representation of the cross-section and longitudinal section of the multicore fibers and their separation into the output fibers with a view of the different forms of propagation therein.

Figure 3 shows the temperature measurement system for two points on the surface.

Figure 4 shows different examples of multicore fiber meshing, with different spatial resolutions on the same surface. Furthermore, a configuration proposed for different functions of the different cores of the multicore fiber can be seen in Figure 4a.

Figure 5 shows different self-calibration systems, Figures 5a, 5b and 5c are self-calibration systems with power and/or intensity, and Figure 5d is a fluorescence self-calibration system.

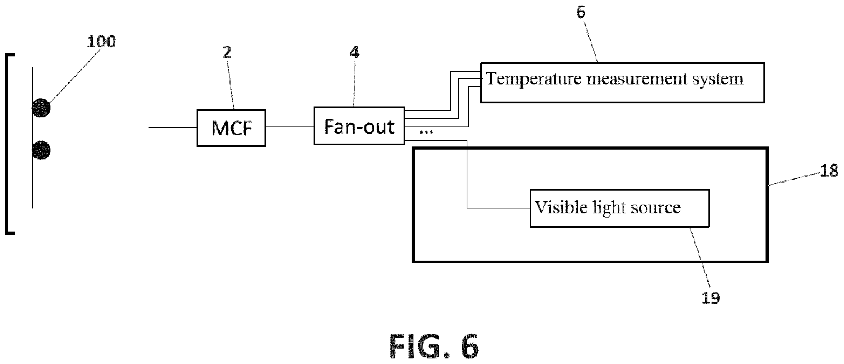

Figure 6 shows the pointing system.

DETAILED DESCRIPTION

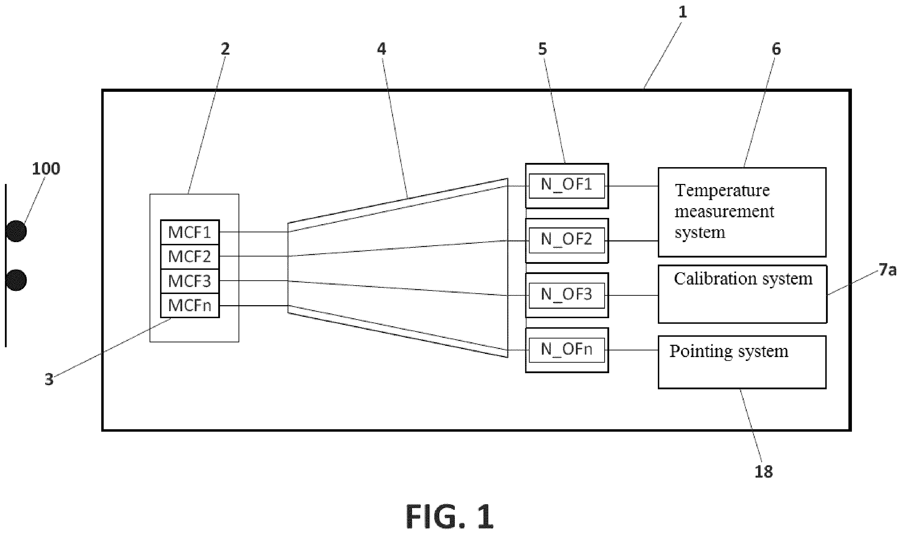

Referring to Figure 1, the pyrometer of the invention 1 comprises a multicore fiber 2 provided with a plurality of cores 3 (N being shown as an example in the figure with N≥2). A spatial output filter 4 (fan out) separates the multicore fiber into individual fibers 5. Some of these individual fibers 5 are connected to a system for temperature measurement 6, others will serve for other functionalities. The minimum number of these fibers at the output of the spatial filter is two.

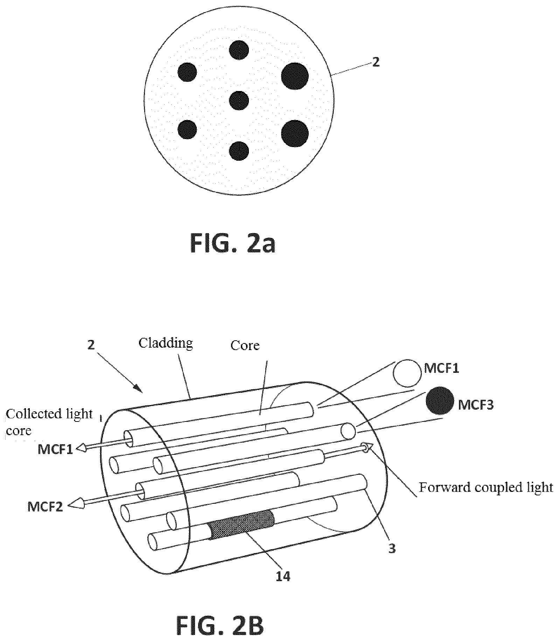

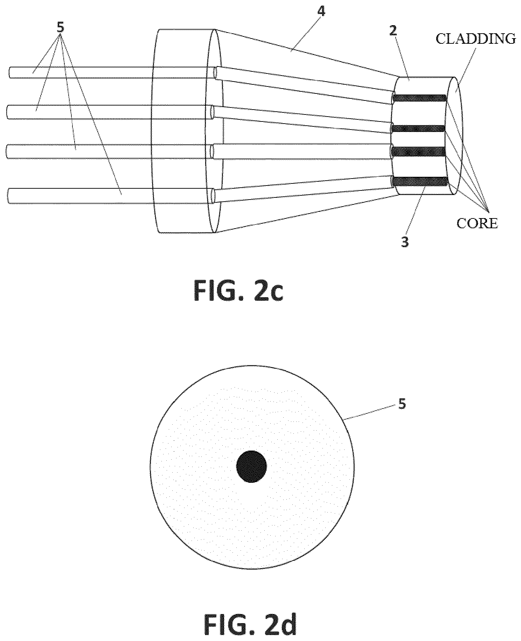

In Figure 2, each of the MCFN cores of multicore fiber 2 can be seen in a cross section (Figure 2a) and longitudinal section (Figure 2b). Those cores that collect radiation for temperature measurement, such as MCF1 and MCF2 in the image, conduct the light backwards. In the case of cores used for alignment or calibration purposes, the emitted reference light travels forwards (see MCF3) and that generated, as a consequence of fluorescence in the case of calibration based on that technique, travels backwards. It is also shown in Figure 2c how the spatial filter 4 separates the multicore fiber into individual fibers 5 each with its own core and cladding as shown in the cross section of Figure 2d.

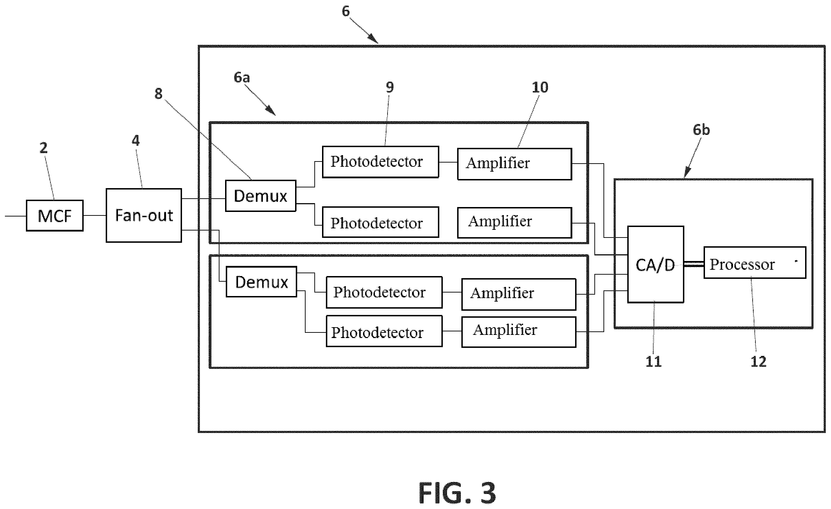

Figure 3 shows the temperature measurement system 6 in detail, in an implementation in which a multicore fiber 2 has two cores. These two cores, each associated with a specific spatial area of the sample to be measured, are separated into two fibers at the exit of the spatial filter 4 and each of the fibers intended for measuring the temperature are connected to the conditioning block 6a of the measurement system 6 being shown.

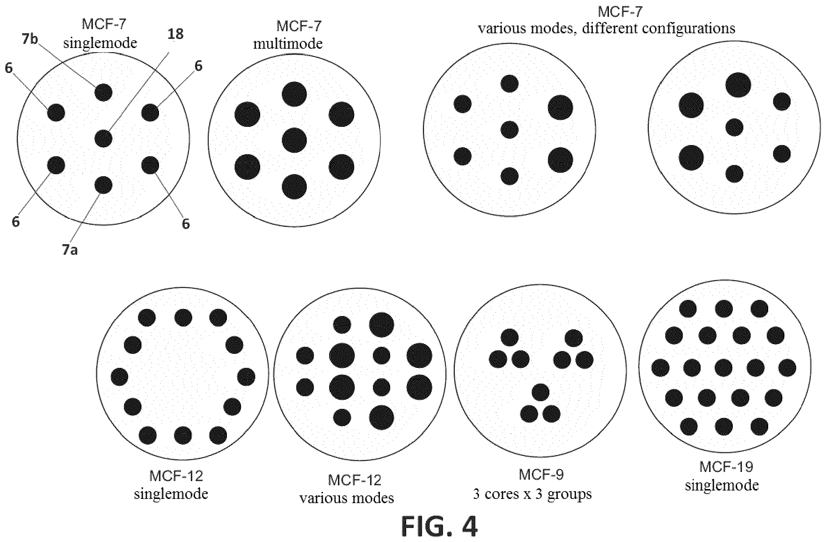

The size, shape, number and arrangement of the cores should be selected depending on what is intended to be measured (surface 100 in figure 1), taking into account that the spatial resolution depends on the numerical aperture of each core (which is a function of its diameter and the relationship between the refractive indices of the core and the cladding) and the distance between the end of the multicore fiber and the surface of the object whose temperature is to be measured. For this reason, different types of MCF fibers can be used with circular or elliptical cores that are arranged symmetrically along the fiber or asymmetrically if temperatures are to be measured in objects with different sizes at different points. The different cores can have different functionalities and different meshes as shown in Figure 4. In a preferred configuration, if a spatial resolution of 10um is desired, an MCF-7 fiber (seven cores) with a core diameter of 5um and a numerical aperture of 0.1 is used, located 25um away from the surface whose temperature is intended to be measured. The other cores will be separated by at least 25um and all of them share the same cladding, preferably 125um to facilitate the connection once the spatial separation is made. This configuration allows a 2D measurement on the surface at seven different points, with great precision in positioning as the mesh is integrated into a single fiber.

In a particular implementation shown in Figure 4a using an MCF-7 fiber (seven cores), one of the cores is used for fluorescence calibration 7a, another for pointing 18, another for intensity calibration 7c and all four remaining would be used for temperature measurement 6 as such. The fiber used is shown in the first example of Figure 4, wherein each of the cores has been identified with the functions previously indicated.

As for the temperature measurement system 6, represented in Figure 3, in its most general implementation, it consists of a conditioning block 6a composed of a wavelength-sensitive demultiplexer 8 to spatially separate the signal spectrum collected by each of the fiber cores 2 with low losses. In an advantageous configuration, the wavelength-sensitive demultiplexer 8 separates the signal collected in each core 3 in two output channels into two spectral bands. The light from each channel is converted to current in a photodetector 9, and conditioned with a transimpedance amplifier 10. Subsequently, in the acquisition and processing block 6b, it is converted into different discrete levels with an acquisition card 11 and a processor 12 is used to obtain an output signal proportional to the temperature of the object. The appropriate joint design of the features of each core 3 of the multicore fiber 2, of the output spatial filter 4 and of the wavelength-sensitive demultiplexer 8, so that the total insertion loss balance in each spectral band is uniform and is compensated with the gain of the conditioning stage, composed of the photodetector 9 and the amplifier 10, throughout the measurement range without saturation, allows increasing the dynamic range of operation of the system that determines the measurement temperature range with high spatial resolution using the same configuration.

A wavelength-sensitive demultiplexer 8 can also be used with N output channels and in each of them perform the conditioning, acquisition and processing function previously indicated for the case of two channels. Each of the output fibers of the spatial filter 4 intended to measure the temperature at different points must be connected to the temperature measurement system 6. Likewise, the measurement on several output fibers can be combined using an M:1 switch and processed together to increase the signal level when the individual resolution of each core of the multi-core fiber is not required. The temperature measurement system shared between all the temperature sensing fibers can also be used depending on the requirements at the acquisition time, so that an M:1 switch is included that connects each of the output fibers of the spatial filter 4 with the input of the wavelength-sensitive demultiplexer 8 of the conditioning block 6a. This system also allows the use of lock-in techniques for signal processing.

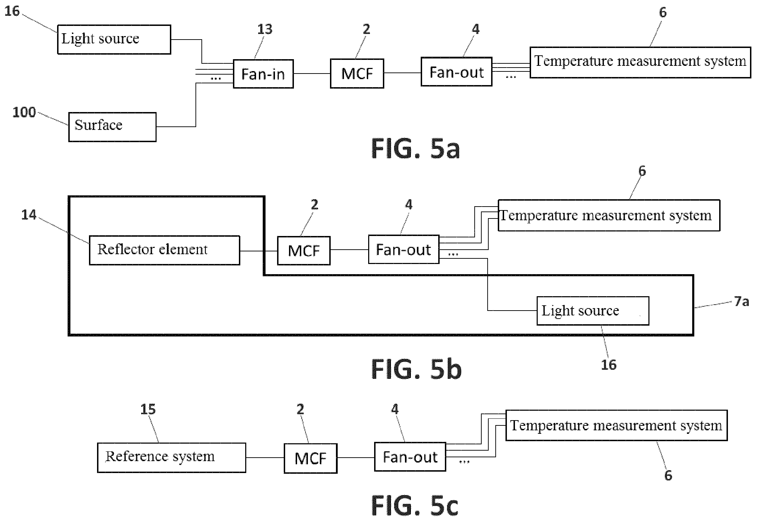

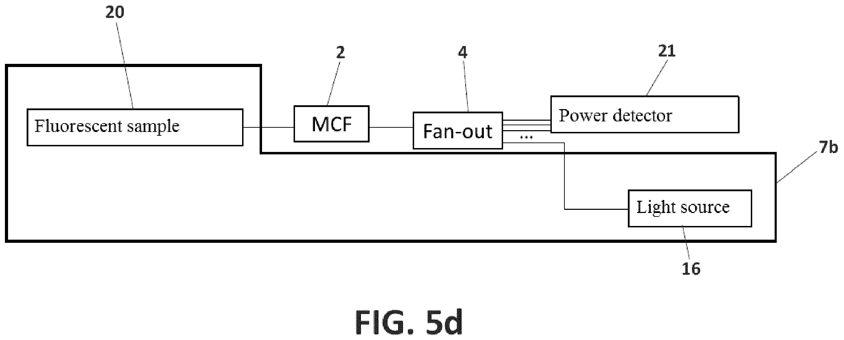

The calibration system has the function of self-calibrating by using different techniques. The self-calibration functionality by intensity allows the calibration curve performed in the laboratory to be correlated with real conditions, using an infrared source within the system's measurement range. Four possible systems used for calibration are shown in Figures 5a, 5b, 5c and 5d. First, the diagram used in the intensity/power calibration used in the laboratory is shown (figure 5a). An injector filter 13 (fan-in) allows a light source 16 to be injected through one of the fiber cores to collect, by means of the temperature measurement system 6, the light that has propagated through the system at the other end of the fiber. Figure 5b shows the self-calibration system used in real environments 7a, wherein at one end the light source 16 is incident, which will propagate through one of the cores of the MCF fiber 3 due to the use of the spatial filter 4, at the other end of the fiber, the light is reflected in a reflecting element 14 that can be external or internal in one of the cores of the MCF fiber 3 so it can travel backwards through another core in which the intensity or power obtained after the passage of light through the different elements used in the temperature measurement system 6 is measured. Subsequently, the intensity obtained in both calibrations (self-calibration and calibration in the laboratory) is compared to know if the insertion losses that the system has once assembled in the real environment are equal to those it had in the laboratory and thus be able to confirm that calibrations to be used to convert the received intensity/power into temperature are correct. Another in-situ calibration system consists of placing a reference system 15 that resembles a black body at the entrance to one of the cores of the multicore fiber to have a reference measurement that can be related to the calibration carried out in the laboratory, as shown in Figure 5c.

The self-calibration system based on fluorescence 7b shown in Figure 5d is used with a sample manufactured with a fluorescent element 20. To use this system, a light source 16 is used that excites the fluorescent sample 20, for this purpose the source with a suitable wavelength for the chosen material must be selected. Once the fluorescent excitation of the material has occurred, the excitation is collected with one of the cores of the MCF fiber 2 and data is analyzed with a power detector 21, thus allowing a determination of the absolute temperature to be made. The fluorescent material must be selected based on the approximate temperature to be measured in order to have a more reliable measurement. For this purpose, the Arrhenius equation must be taken into account, which relates the activation energy of non-radiative processes ($E_{nr}$)) of the material with the temperature (T) and the luminescence intensity (I):

$$ln\frac{I(T)}{I(T_{ref})} = \frac{E_{nr}}{R}\left(\frac{1}{T} - \frac{1}{T_{ref}}\right)$$

This measurement is processed with a specific algorithm to adjust the system calibration curve.

Finally, the pointing or positioning system 18 consists of a visible source 19, for example, a red or green LED or laser that is injected into one of the output fibers of the spatial filter 4 so that through the core of the corresponding multicore fiber it is projected onto the object or surface to be measured, allowing the specific measurement point to be located.

In view of this description and figures, the person skilled in the art will be able to understand that the invention has been described according to some preferred embodiments thereof, but that multiple variations can be introduced in said preferred embodiments, without exceeding the subject matter of the invention as claimed.

**Claims**

1. High spatial resolution pyrometer **characterized in that** it is provided with at least one multi-core fiber (2) and a spatial filter (4), wherein said multi-core fiber has a number N=>2 of cores (3) that are transformed into at least two output fibers (5) by means of said spatial filter (4), said output fibers (5) being connected to a temperature measurement system (6), wherein the temperature measurement system comprises a wavelength-sensitive demultiplexer (8) with at least two outputs to spatially separate the spectrum of the signal collected by each of the cores (3).

2. Pyrometer according to claim 1 **characterized in that** each output fiber (5) of the spatial filter (4) is connected to a conditioning block (6a) formed by a photodetector (9) and an amplifier (10).

3. Pyrometer according to claim 1 **characterized in that** the temperature measurement system (6) comprises a wavelength-sensitive demultiplexer (8) with N outputs and a photodetector (9) and an amplifier (10) for each of the outputs.

4. Pyrometer according to claim 2 **characterized in that** the temperature measurement system (6) is provided with a single conditioning block (6a) and an M:1 switch that connects each of the output fibers (5) of the spatial filter (4) with the input of the wavelength-sensitive demultiplexer (8) of the conditioning block (6a) of the temperature measurement system (6).

5. Pyrometer according to claims 3 or 4 **characterized in that** at least two output fibers (5) of the spatial filter (4) are combined with a M:1 switch whose output is connected to the wavelength-sensitive demultiplexer (8) of the conditioning block (6a) of the temperature measurement system (6).

6. Pyrometer according to any of the previous claims **characterized in that** it is provided with a calibration system (7a,7b,13, 14,15, 16, 20).

7. Pyrometer according to claim 6 **characterized in that** the calibration system comprises a light source (16) and a fluorescent sample (20) for fluorescence calibration.

8. Pyrometer according to claim 6 **characterized in that** the calibration system comprises a light source (16) and a reflector element (14) for in-situ calibration.

9. Pyrometer according to claim 6 **characterized in that** the calibration system comprises a light source (16) and a reference system (15).

10. Pyrometer according to any of the previous claims **characterized in that** one of the cores has a pointing function (18).

11. Pyrometer according to any of the previous claims **characterized in that** the cores (3) of the multi-core fiber (2) have different sizes so that their measurement capacity has different spatial resolutions and different temperature ranges depending on the size of each of said cores.

**FIG. 1**

FIG. 2a

FIG. 2B

**FIG. 2c**

**FIG. 2d**

MCF — 2

Fan-out — 4

6

6a

8

Demux

Photodetector — 9

Photodetector

Amplifier — 10

Amplifier

Demux

Photodetector

Photodetector

Amplifier

Amplifier

6b

CA/D — 11

Processor — 12

**FIG. 3**

MCF-7 singlemode

MCF-7 multimode

MCF-7 various modes, different configurations

MCF-12 singlemode

MCF-12 various modes

MCF-9 3 cores x 3 groups

MCF-19 singlemode

FIG. 4

EP 4 328 555 A1

16 — Light source

13 — Fan-in

2 — MCF

4 — Fan-out

6 — Temperature measurement system

100 — Surface

...

**FIG. 5a**

14 — Reflector element

2 — MCF

4 — Fan-out

6 — Temperature measurement system

16 — Light source

7a

...

**FIG. 5b**

15 — Reference system

2 — MCF

4 — Fan-out

6 — Temperature measurement system

...

**FIG. 5c**

11

FIG. 5d

FIG. 6

<table>
<tr><td colspan="2">**INTERNATIONAL SEARCH REPORT**</td><td>International application No.<br>PCT/ES2022/070240</td></tr>
</table>

**A. CLASSIFICATION OF SUBJECT MATTER**

*G01J5/08* (2022.01)

According to International Patent Classification (IPC) or to both national classification and IPC

**B. FIELDS SEARCHED**

Minimum documentation searched (classification system followed by classification symbols)
G01J

Documentation searched other than minimum documentation to the extent that such documents are included in the fields searched

Electronic data base consulted during the international search (name of data base and, where practicable, search terms used)

EPODOC, INVENES, WPI, NPL, XPESP, XPIAP, XPI3E, INSPEC.

**C. DOCUMENTS CONSIDERED TO BE RELEVANT**

| Category* | Citation of document, with indication, where appropriate, of the relevant passages | Relevant to claim No. |
|---|---|---|
| A | VAZQUEZ C et al... Very Localized Temperature Measurements and Applications Using Optical Fiber Pyrometers. 2019 21st International Conference On Transparent Optical Networks (ICTON), 20190709 IEEE., 09/07/2019, pages 1 - 4, <DOI: 10.1109/ICTON.2019.8840361> | 1-11 |
| A | KHAN FOUZIA et al.. Multi-Core Optical Fibers With Bragg Gratings as Shape Sensor for Flexible Medical Instruments. IEEE Sensors Journal, 20190715 IEEE, USA, 15/07/2019, Vol. 19, N° 14, pages 5878 - 5884, ISSN 1530-437X, <DOI: 10.1109/JSEN.2019.2905010> | 1-11 |

☐ Further documents are listed in the continuation of Box C.    ☐ See patent family annex.

| | | |
|---|---|---|
| * | Special categories of cited documents: | |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | |
| "O" | document referring to an oral disclosure use, exhibition, or other means. | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other documents , such combination being obvious to a person skilled in the art

"&" document member of the same patent family

| Date of the actual completion of the international search<br>04/07/2022 | Date of mailing of the international search report<br>(07/07/2022) |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>J. Botella Maldonado<br><br>Telephone No. 91 3495382 |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110046916 A1